Europäisches Patentamt

European Patent Office

Office européen des brevets

(19)

(11) Numéro de publication : **0 000 462**

**B1**

(12) FASCICULE DE BREVET EUROPÉEN

(45) Date de publication du fascicule du brevet :
17.03.82

(21) Numéro de dépôt : 78400050.7

(22) Date de dépôt : 03.07.78

(51) Int. Cl.³ : **C 08 F291/02**, C 08 F279/02,
C 08 F 2/18, C 08 F 2/22 //
(C08F291/02, 212/04,
220/02),(C08F279/02, 212/04,
220/02)

(54) Procédé de fabrication de copolymères greffés par polymérisation-greffage en émulsion-suspension.

(30) Priorité : 12.07.77 FR 7721435

(43) Date de publication de la demande :
24.01.79 (Bulletin 79/02)

(45) Mention de la délivrance du brevet :
17.03.82 Bulletin 82/11

(84) Etats contractants désignés :
BE CH DE FR GB LU NL SE

(56) Documents cités :
FR - A - 2 319 651
US - A - 3 436 440
US - A - 3 887 652

(73) Titulaire : **P C U K PRODUITS CHIMIQUES UGINE
KUHLMANN**
**Service Propriété Industrielle Tour Manhattan**
**F-92087 Paris La Defence 2 Cédex 21 (FR)**

(72) Inventeur : **Delsarte, Jacques**
**Croix des Malades No 5**
**F-60134 Villers-Saint-Sepulcre (FR)**

(74) Mandataire : **Monceaux, Pierre et al**
**PRODUITS CHIMIQUES UGINE KUHLMANN Service
Propriété Industrielle**
**Tour Manhattan Cédex 21 F-92087 Paris La Defense
(FR)**

Imprimerie Jouve, 18, rue St-Denis, 75001 Paris, France

Procédé de fabrication de copolymères greffés par polymérisation-greffage en émulsion-suspension

La présente invention a pour objet un procédé de fabrication de copolymères greffés par polymérisation-greffage en émulsion-suspension. Ce procédé permet d'obtenir un produit qui tout en conservant de bonne propriétés mécaniques, en particulier de résistance au choc et à la traction, possède une excellente fluidité à chaud et un très bon aspect de surface, en particulier une excellente brillance.

Parmi les procédés connus de polymérisation-greffage de monomères éthyléniquement insaturés sur des squelettes d'élastomères greffables, le procédé dit en émulsion aqueuse ne donne satisfaction que dans le cas où les latex utilisés pour le greffage sont polydispersés. Lorsque ce même procédé est appliqué à des latex monodimensionnels d'élastomère on obtient des produits dont la fluidité à chaud et l'aspect de surface peuvent être satisfaisants mais dont la résistance au choc est médiocre. D'autres procédés connus décrits en particulier dans les brevets des Etats-Unis d'Amérique n$^{os}$ 3 370 105 et 3 436 440 et dans les brevets français n$^{os}$ 2 233 365 et 2 304 645 consistent à mettre en suspension des latex d'élastomère greffables. Ces procédés permettent d'obtenir des produits dont la résistance au choc est élevée et dont la fluidité à chaud peut être également bonne mais dont la dureté et la résistance à la traction sont faibles et surtout dont l'aspect de surface est médiocre.

Des procédés en deux étapes émulsion-suspension sont également connus. Dans le brevet des Etats-Unis d'Amérique n° 3 887 652 est décrit, afin d'obtenir un polymère greffé transparent, une prépolymérisation greffage de monomères acryliques et vinyliques en émulsion aqueuse sur un latex d'élastomère, de structure indéfinie, à base de butadiène, suivie d'une addition complémentaire de monomères et d'une postpolymérisation en suspension. Afin d'obtenir le but recherché il est essentiel dans ce procédé de ne pas faire grossir dans la phase suspension les particules formées dans la phase émulsion, ces dernières devant conserver leur granulométrie initiale. Dans ces conditions on obtient un produit possédant de mauvaises propriétés mécaniques, si on utilise comme latex d'élastomère un latex monodimensionnel.

Le procédé décrit dans le brevet français 2 319 651 concerne également une polymérisation greffage en émulsion-suspension de monomère éthyléniques sur un latex d'élastomère de structure indéfinie. Selon ce procédé on ajoute l'agent de mise en suspension après avoir atteint un taux de conversion minimum, puis après un nouvel ajout de monomère on achève la polymérisation en suspension. Comme dans le cas précédent il n'est pas possible d'obtenir des produits possédant de bonnes propriétés mécaniques en utilisant comme latex un latex monodimensionnel. Ces procédés émulsion-suspension ne donnent des résultats valables qu'avec des latex polydispersés.

Selon la présente invention, tout en combinant les avantages des procédés en émulsion et en suspension sans en supporter les inconvénients, il est possible de fabriquer un produit d'excellente qualité tant en propriétés mécaniques qu'en aspect de surface. Le procédé consiste à effectuer une prépolymérisation greffage en émulsion aqueuse en présence d'un latex d'élastomère nécessairement sous forme monodimensionnelle puis, afin de remédier aux inconvénients des autres procédés qui ne permettent pas d'obtenir des produits de bonne qualité, d'ajouter en fin d'émulsion, juste avant le passage en suspension une nouvelle fraction de latex monodimensionnel. Le procédé s'applique à la fabrication des copolymères greffés obtenus habituellement par polymérisation greffage d'un mélange de monomères composé d'au moins un dérivé vinylaromatique et d'au moins un dérivé acrylique ou méthacrylique sur un substrat élastomérique contenant des liaisons éthyléniques.

De façon plus précise il s'agit d'un procédé de fabrication de copolymères greffés par polymérisation en présence de latex d'élastomère, possédant un taux d'insaturation minimum de 3 % en poids, d'un mélange de monomères, composé d'au moins un dérivé vinylaromatique et d'au moins un dérivé acrylique ou méthacrylique, la polymérisation s'effectuant en deux étapes :

a) la première en émulsion aqueuse poursuivie jusqu'au rapport ax/b d'au moins 30 %, et, de préférence d'au moins 40 %, « x » étant le taux de conversion des monomères introduits exprimé en pour cent de la quantité totale « a » exprimée en parties en poids desdits monomères et « b » étant la quantité d'élastomère exprimée en parties en poids de matières sèches,

b) la seconde en suspension,

caractérisé en ce que dans l'étape a) le latex d'élastomère est monodimensionnel et, le rapport ax/b désiré étant atteint, il est procédé à un nouvel ajout de latex monodimensionnel d'élastomère avant d'achever la réaction dans l'étape b).

Théoriquement on entend par latex monodimensionnel, par opposition à latex polydispersé, un latex constitué de particules sphériques possédant toutes rigoureusement le même diamètre. En réalité, un tel produit idéal n'existe pas. En fait, on caractérise un latex par la courbe de distribution granulométrique exprimée en poids, en nombre et en surface ainsi qu'il est montré dans « Emulsion Polymerization » 1955 — Interscience Publishers, Inc., New York — pages 293-294 s'agissant de latex polydispersé. Aussi un latex est-il dit monodimensionnel quand ses courbes de distribution granulométriques en poids, nombre et surface sont pratiquement superposables, comme montré dans « High Polymer Latices » — 1966, Vol. 1 Maclaren and Sons LTD — London, pages 10 et 12. De manière pratique on dit d'un latex qu'il est monodimensionnel lorsque le rapport de son diamètre moyen D'p exprimé en poids à son diamètre moyen Dn exprimé en nombre est inférieur à 1,1 avec :

## 0 000 462

$$Dn = \frac{\sum ni \ di}{\sum ni}$$

$$D'p = \left( \frac{\sum ni \ di^3}{\sum ni} \right)^{1/3}$$

Dans la première étape, dite de polymérisation en émulsion, on met d'abord en œuvre de 60 à 95 % et de préférence de 70 à 90 % de la quantité totale du latex monodimensionnel entrant dans la composition du copolymère greffé, le reste du latex, appelé latex monodimensionnel complémentaire, étant ajouté en fin d'émulsion avant l'étape de mise en suspension du milieu réactionnel et après que le rapport ax/b désiré soit atteint. Ce latex monodimensionnel complémentaire n'est pas nécessairement le même que celui mis en œuvre en début de polymérisation en émulsion, l'important étant qu'il s'agisse d'un latex monodimensionnel d'élastomère greffable. Lorsqu'on utilise le même latex on préfère que son taux de gel, déterminé dans le benzène, soit de 80 à 95 % pour un indice de gonflement d'environ 8 à 18. Par contre lorsqu'on utilise un latex monodimensionnel complémentaire différent de celui mis en œuvre en début de la polymérisation en émulsion on préfère que son taux de gel soit de 40 à 80 % et mieux de 60 à 80 % pour un indice de gonflement d'environ 18 à 40. Dans ce dernier cas le latex mis en œuvre en début d'émulsion possède généralement un taux de gel de 80 à 95 % pour un indice de gonflement d'environ 8 à 18.

Afin que le greffage de l'étape en émulsion s'effectue dans de bonnes conditions et en particulier sans apparition de floculat et sans encrassement excessif du réacteur il est recommandé d'ajuster préalablement la stabilisation du latex plutôt que d'introduire l'émulsifiant en cours de polymérisation. Les systèmes de stabilisation sont ceux couramment employés, ce sont par exemple les savons d'acide gras, les alkyl et alkyl aryl sulfonates, les sels des acides résiniques, les polyoxyalcoylènes hydrosolubles. Parmi ces systèmes on préfère utiliser les sels de potassium ou de sodium de l'acide laurique à raison de 0,1 à 4 parties en poids par rapport au latex compté en sec.

De façon générale tous les élastomères possédant un taux d'insaturation minimum de 3 % en poids et se présentant sous la forme de latex monodimensionnel conviennent dans le procédé objet de l'invention. Ces élastomères sont soit des homopolymères, comme par exemple le polyisoprène, le polychloroprène, le polybutadiène, soit des copolymères qui à titre indicatif peuvent être des copolymères à base d'éthylène, de propylène, d'isobutylène, ou encore des copolymères de styrène et de butadiène, d'acrylonitrile et de butadiène. Le caoutchouc naturel convient également comme élastomère dans le procédé objet de l'invention. En général les élastomères les plus couramment utilisés dans la fabrication des copolymères selon l'invention sont les polybutadiènes et les copolymères de styrène et de butadiène. Lorsqu'on utilise un copolymère de styrène et de butadiène, la teneur en styrène est habituellement inférieure à 20 % en poids.

Les monomères selon le procédé de l'invention peuvent être introduits en totalité pendant l'étape de polymérisation en émulsion. Ils peuvent également être introduits séparément ou en mélange, en continu ou en discontinu. Un supplément de monomère peut également être introduit en fin de polymérisation en émulsion lorsque le rapport ax/b souhaité est atteint.

Parmi les dérivés vinylaromatiques utilisables comme monomères dans le procédé on peut citer à titre d'exemples le styrène, l'α-méthylstyrène et les styrènes substitués tels que l'o-méthylstyrène, le m-méthylstyrène, le p-méthylstyrène, les diméthylstyrènes, triméthylstyrène et les halogénostyrènes tels que le 2,5-dichlorostyrène.

Parmi les dérivés acryliques ou méthacryliques utilisables comme monomères dans le procédé, on peut citer également à titre d'exemples les acides acrylique et méthacrylique, l'acrylate de méthyle, l'acrylate d'éthyle, l'acrylate de butyle, le méthacrylate de méthyle, le méthacrylate d'éthyle, le méthacrylate de butyle, l'acrylonitrile, le méthacrylonitrile.

On peut éventuellement remplacer une partie d'un ou des monomères du mélange, composé d'un dérivé vinylaromatique et d'un dérivé acrylique ou méthacrylique, par un tiers monomère comme par exemple du chlorure de vinyle, un ester de vinyle tels que l'acétate ou le propionate, un éther de vinyle tel que l'éthylvinyl éther.

Les mélanges de styrène et d'acrylonitrile conviennent particulièrement dans l'application du procédé objet de l'invention. Habituellement dans ce cas, le rapport en poids styrène-acrylonitrile est compris entre 60/40 et 80/20 et de préférence voisin de 70/30 de façon à ce que la résine formée ait une composition voisine de la composition azéotropique. Convient également bien le mélange styrène-méthacrylate de méthyle.

La mise en œuvre du procédé selon l'invention peut s'effectuer dans un réacteur pourvu d'une régulation thermique et d'un système d'agitation convenant aux procédés émulsion et suspension classiques. Dans l'étape de polymérisation en émulsion on opère de façon connue. La quantité de latex nécessaire à la fabrication du copolymère greffé en phase émulsion et les monomères sont introduits dans le réacteur contenant la quantité d'eau suffisante pour la réaction. En variante les monomères peuvent être introduits régulièrement au cours de la polymérisation en émulsion au moyen par exemple d'une pompe doseuse. L'agitation étant telle qu'une bonne homogénéisation du milieu réactionnel soit assurée, la température est maintenue entre 20 et 100 °C et de préférence entre 40 °C et 80 °C. La

3

0 000 462

réaction est poursuivie jusqu'à ce que le rapport ax/b choisi soit atteint. A ce stade on ajoute le latex monodimensionnel complémentaire ainsi qu'un éventuel supplément de monomère puis on démarre la polymérisation en suspension de la deuxième étape du procédé par introduction dans le milieu réactionnel d'une solution de colloïdes protecteurs. Cette polymérisation en suspension s'effectue également dans les conditions connues d'agitation, de température et de temps de réaction. La température de réaction est en général comprise entre 40 et 150 °C et de préférence entre 60 °C et 120 °C pendant un temps suffisant à la polymérisation complète des monomères.

La réaction achevée, le réacteur est vidé puis après décantation, centrifugation et séchage on récupère le copolymère greffé sous forme de perles. En général les perles sèches contiennent moins de 0,1 % de monomères résiduels.

Le procédé décrit peut également être exécuté d'autres manières connues. Il est envisageable par exemple de réaliser la polymérisation émulsion-suspension en continu dans plusieurs réacteurs en cascade.

Tous les adjuvants éventuellement incorporés lors des polymérisations en émulsion et en suspension classiques sont utilisables selon le procédé de l'invention. C'est ainsi que dans l'étape de polymérisation en émulsion on utilise les initiateurs, les agents de transfert de chaînes, les catalyseurs, les anti-oxydants, les lubrifiants connus de l'homme de métier. Il en est de même des initiateurs, des agents de transfert de chaîne et des colloïdes protecteurs utilisés dans l'étape de polymérisation en suspension.

Les initiateurs sont généralement de deux types : ceux hydrosolubles traditionnellement efficaces dans les procédés de polymérisation en émulsion et ceux liposolubles préférables en suspension. A titre d'exemples on peut citer comme initiateurs de polymérisation en émulsion : le persulfate de potassium, le persulfate d'ammonium, le peroxyde de sodium, le peroxyde d'hydrogène, des composés azoïques comme l'azo-bis-isobutyronitrile ou le 2,2-azo-bis(2,4-diméthylvaléronitrile), et comme initiateur de polymérisation en suspension : les peroxy dicarbonates comme le bis(4t-butyl cyclohexyl) peroxy dicarbonate, le dicyclohexyl peroxydicarbonate, le bis(2-éthyl hexyl) peroxydicarbonate, le di-n butyl peroxy dicarbonate, le diisopropyl peroxydicarbonate ; les peroxydes d'alkyle comme le peroxyde de lauroyle, le peroxyde de décanoyle ; les peroxydes aromatiques comme le peroxyde de benzoyle ; les perpivalates comme le perpivalate de t-butyle ; les perbenzoates comme le perbenzoate de t-butyle ; les peracétates comme le peracétate de t-butyle.

Les catalyseurs utilisés sont de préférence le persulfate de potassium dans l'étape de polymérisation en émulsion et le perpivalate de t-butyle, le peroxyde de lauroyle, le perbenzoate de di-ti-butyle employés seuls ou en combinaison dans l'étape de polymérisation en suspension. Ces catalyseurs ne sont pas exclusifs, il est évident que tous les catalyseurs connus pour ces genres de polymérisation conviennent pour le procédé de l'invention.

L'utilisation d'agents de transfert de chaîne pendant l'étape de polymérisation en émulsion est recommandée pour améliorer la fluidité du copolymère greffé final. Les plus connus sont les mercaptans linéaires ou ramifiés, les thioéthers, le dimère de l'$\alpha$-méthylstyrène, certains composés oléfiniques.

Les colloïdes protecteurs utilisés dans l'étape de polymérisation en suspension sont des produits classiques bien connus. Ce sont par exemple l'hydroxy éthyl cellulose, la méthyl cellulose, l'acide polyacrylique, le polyacrylamide, la carboxy méthyl-méthyl-cellulose, l'alcool polyvinylique, des polyglycols, des gélatines, des alginates hydrosolubles et leur mélange, les préférés étant l'hydroxyéthyl cellulose et l'alcool polyvinylique. On peut utiliser également des agents minéraux tels que le phosphate tricalcique par exemple. Ils sont en général employés en solution aqueuse à raison de 0,1 à 3 parties en poids par rapport au poids de copolymère à fabriquer.

Il est souhaitable, mais non indispensable d'ajouter un lubrifiant au mélange réactionnel avant l'étape de polymérisation en suspension. Ces lubrifiants sont classiques, ce peut être des mélanges de cire de paraffine et d'huile d'hydrocarbure, des huiles minérales raffinées, ou encore des esters tels que le stéarate de butyle et le phtalate de dioctyle. Ils sont utilisés en des quantités pouvant varier de 1 à 4 parties en poids pour 100 parties en poids de copolymère greffé.

Le procédé selon l'invention permet de fabriquer des copolymères greffés contenant en poids de 10 à 70 % et de préférence de 40 à 60 % d'élastomère.

Les copolymères greffés contenant de 40 à 70 % d'élastomère ont en général une très grande résilience, ce qui permet de commercialiser des copolymères greffés de qualités différentes préparés par mélange, à des taux variables, de copolymère greffé avec d'autres polymères ou copolymères. Ainsi ces copolymères greffés peuvent être mélangés à des copolymères greffés de polychlorure de vinyle sur divers élastomères, à des copolymères acrylonitrile-butadiène-styrène, à des copolymères greffés d'acrylonitrile et de styrène sur des élastomères à faible taux d'insaturation comme les copolymères éthylène-propylène-diène monomère (EPDM) ou les caoutchoucs butyles ou acryliques et également avec des résines telles que le polychlorure de vinyle, les résines styrènes-acrylonitrile et leurs dérivés. De tels mélanges ont habituellement une teneur en poids d'élastomère comprise entre 5 et 60 % et plus généralement comprise entre 10 et 40 %.

Ce procédé de fabrication selon l'invention de copolymères greffés réduit l'agglomération du latex greffé en émulsion au moment de la mise en suspension ce qui procure la brillance du produit final et permet grâce à la nouvelle introduction de latex en fin d'émulsion d'assurer le grossissement d'un nombre suffisant de particules pour assurer de bonnes propriétés mécaniques au produit final, la

4

cohésion de l'ensemble étant assurée par la polymérisation-greffage en suspension du reste des monomères.

Ce procédé présente l'avantage d'être réalisé à partir de latex monodimensionnels. Jusqu'à présent les latex monodimensionnels ne permettaient pas de réaliser un greffage tel que le produit final présente à la fois de bonnes propriétés mécaniques, une bonne fluidité et un aspect de surface convenable. Cet avantage présente un grand intérêt étant bien connu que les latex monodimensionnels fins peuvent être facilement fabriqués de façon peu onéreuse.

Dans les exemples qui suivent les propriétés mécaniques sont déterminées sur des mélanges du copolymère greffé avec un copolymère, mélanges appelés : Qualité 1 — Qualité 2 — Qualité 3, dans les exemples 1 à 4.

— Qualité 1 : le copolymère greffé de l'exemple est intimement mélangé à un copolymère styrène-acrylonitrile contenant en poids 70 % de styrène et 30 % d'acrylonitrile, et de viscosité intrinsèque mesurée dans le diméthylformamide de 0,67 dl/g. La teneur en élastomère est de 28 % en poids par rapport au poids de mélange final.

— Qualité 2 : correspond à la Qualité 1, la différence étant que la teneur en élastomère est de 13,5 % en poids par rapport au poids de mélange final.

— Qualité 3 : le copolymère greffé de l'exemple est intimement mélangé à un copolymère α-méthylstyrène-acrylonitrile contenant en poids 69 % d'α-méthylstyrène et 31 % d'acrylonitrile, et de viscosité intrinsèque mesurée dans le diméthylformamide de 0,60 dl/g.

Pour la détermination des propriétés mécaniques, les copolymères greffés des exemples sont mélangés au copolymère dans un mélangeur interne. La masse est reprise sur un mélangeur ouvert, puis granulée. Les granulés sont injectés au moyen d'une presse à vis. Les conditions d'injection pour chacune des qualités sont les suivantes :

|  | Températures | Pression en bars |
|---|---|---|
| Qualité 1 | 180-190 °C | 100 |
| Qualité 2 | 170-180 °C | 90 |
| Qualité 3 | 200-210 °C | 110 |

Les propriétés mesurées sont les suivantes :

— La résistance au choc Izod entaillé suivant la norme ASTM D 256-56 exprimée en Joule/mètre (J/m).

— La viscosité Mooney ML(5 + 5) mesurée à 177 °C.

— La température de déformation sous charge (HDT) sous 18,5 daN mesurée suivant la norme ASTM D 648-58 T et exprimée en degré celcius.

— La résistance à la traction au seuil suivant la norme ASTM D 638-64 T exprimée en MPa (Mega Pascal).

— La dureté Rockwell R suivant la norme ASTM D 785-65.

— La brillance ; les mesures de brillance sont effectuées sur des plaquettes injectées avec une presse à piston sous une pression de 70 bars et à 250 °C à l'aide d'une brillance mètre Lange Universal Messgerät opérant par réflexion sous une incidence de 45° et étalonné avant chaque mesure de telle manière qu'un carreau de céramique noir et brillant donne la valeur 100.

Dans tous les exemples on opère dans un même réacteur de 16 l équipé d'une régulation de température fonctionnant entre 30 et 140 °C et muni d'un agitateur dont la vitesse de rotation est variable entre 60 et 500 t/mn le réacteur est conçu pour résister à des pressions internes inférieures à 15 bars et est muni de plusieurs orifices permettant diverses additions. Plusieurs pompes doseuses ainsi que plusieurs sas conçus pour résister à des pressions élevées peuvent s'adapter sur ce réacteur.

Dans tous les exemples les quantités de produits utilisés sont exprimées en parties en poids ramenées à 100 parties en poids de copolymère greffé.

Les exemples comparatifs 1, 2 et 3 ne font pas partie du domaine de l'invention, ils sont donnés à titre comparatif et destinés à en préciser les limites et à en montrer ses avantages.

### Exemple comparatif 1 : sans 1re étape (a)

Dans cet exemple on procède à une mise en suspension du milieu réactionnel sans avoir effectué de polymérisation en émulsion au préalable.

Les caractéristiques du latex utilisé sont données dans le tableau suivant :

| Essai | |
|---|---|
| Référence du latex | n |
| Nature | polybutadiène monodimensionnel |
| Extrait sec | 42,1 % |

# 0 000 462

(Suite)

| Essai | | |
|---|---|---|
| Dn (*) (diamètre moyen en nombre) | . | 2 000 Å |
| D'p (*) (diamètre moyen en poids) | | 2 050 Å |
| Viscosité Mooney (**) | | 220 |
| Taux de gel | | 87,9 % |
| Indice de gonflement | | 14,2 % |
| Stabilisation | | Laurate de potassium 1,8 % |

(**) Mooney : ML (1 + 4) à 100 °C.

$$\text{(*)} \; Dn = \frac{\sum ni \; di}{\sum ni} \qquad . \qquad \text{(*)} \; D'p = \left(\frac{\sum ni \; di^3}{\sum ni}\right)^{1/3}.$$

Le copolymère greffé préparé contient 50 % de polybutadiène, 38 % de styrène et 12 % d'acrylonitrile.

On charge le réacteur avec 50 parties de latex compté en extrait sec. On ajuste la dilution de façon à ce que l'eau totale, y compris celle du latex soit de 160 parties. On introduit une solution de 0,5 partie de persulfate de potassium dans 5 parties d'eau, puis un mélange contenant 38 parties de styrène, 12 parties d'acrylonitrile, 0,4 partie de tertiododécyle mercaptan, 1,5 partie de trinonyl phényl phosphite, 0,2 partie de perpivalate de t-butyle. On ajoute ensuite 1,5 partie d'alcool polyvinylique en solution dans 50 parties d'eau. On ferme le réacteur. On agite à 250 t/mn et on chauffe à 60 °C pendant 10 heures.

Après refroidissement on obtient une poudre fine qui est lavée, centrifugée et séchée.

Les propriétés mécaniques suivantes ont été mesurées :

| Essai | | | |
|---|---|---|---|
| Qualité 1 | Izod | 310 J/m | |
| | Traction | 27,3 MPa | |
| | Dureté | 79 | |
| | Mooney | 44 | |
| | HDT | 95 °C | |
| | Brillance | 22 | aspect de surface inégal et mat |
| Qualité 2 | Izod | 60 J/m | |
| | Traction | 36,5 MPa | |
| | Dureté | 106 | |
| | Mooney | 23 | |
| | HDT | 95,2 °C | |
| | Brillance | 51 | aspect de surface inégal et mat |

Cet essai montre qu'une mise en suspension du milieu réactionnel dès le départ de la réaction c'est-à-dire sans une étape de greffage en émulsion suffisante, conduit à des copolymères greffés ne donnant que des produits d'aspect de surface inégal et mat, de dureté Rockwell faible, de résistance à la traction faible, de viscosité Mooney satisfaisante et de choc Izod relativement élevé pour la qualité riche en copolymère greffé et faible pour la qualité pauvre en copolymère greffé.

Exemple comparatif 2 : ax/b moins de 30

Dans cet exemple, la mise en suspension du milieu réactionnel intervient à un moment où le greffage par polymérisation en émulsion est encore insuffisant.

Les caractéristiques du latex utilisé sont données ci-dessous :

| Référence latex | O |
|---|---|
| Nature | polybutadiène monodimensionnel |
| Extrait sec | 32 % |
| Dn | 2 000 Å |
| D'p | 2 040 Å |

6

**0 000 462**

(Suite)

| | | |
|---|---|---|
| Viscosité Mooney | 210 | |
| Indice de gonflement | 15,8 | |
| Taux de gel | 86,1 % | |
| Stabilisation | Laurate de sodium 1,3 % | |

On prépare un copolymère greffé contenant 50 % de polybutadiène, 38 % de styrène et 12 % d'acrylonitrile.

On charge le réacteur avec les 50 parties de polybutadiène comptées en extrait sec. On ajuste la dilution à 150 parties d'eau, y compris celle du latex. On agite à 80 t/mn et on chauffe à 62 °C. A 62 °C on introduit une solution de 0,5 partie de persulfate de potassium dans 10 parties d'eau, puis on démarre une alimentation continue d'un mélange de 12,7 parties de styrène et 4 parties d'acrylonitrile qui est totalement introduit dans le réacteur en une heure de réaction à 60 °C. Un prélèvement effectué à ce moment donne un extrait sec de 27,9 %.

A l'aide d'un sas on ajoute ensuite un mélange de 25,3 parties de styrène, 8 parties d'acrylonitrile, 0,3 partie de tertiododécyl mercaptan, 1 partie de trinonyl phényl phosphite, 0,2 partie de perpivalate de t-butyle. On porte l'agitation à 250 t/mn. On ajoute 2 parties d'alcool polyvinylique (Polyviol 40/140) en solution dans 100 parties d'eau à l'aide d'un sas. On maintient le milieu sous agitation à 60 °C pendant 10 heures. On récupère ensuite le copolymère dans les conditions habituelles.

Les propriétés mécaniques mesurées sur la qualité 1 sont les suivantes :

| | |
|---|---|
| Izod | 480 J/m |
| Traction | 32,0 MPa |
| Dureté | 93 |
| Mooney | 56 |
| HDT | 94 °C |
| Brillance | 41 aspect de surface mat |

L'extrait sec de 27,9 % mesuré en fin de greffage émulsion correspond à un taux de conversion des monomères présents effectivement introduits en émulsion de 80 %. Le rapport ax/b défini précédemment est de $(12,7 + 4)/50 \times 80 \% = 26,8 \%$.

Le greffage émulsion est insuffisant et l'on constate que le produit a une résilience élevée mais une brillance nettement insuffisante.

Exemple comparatif 3 : sans 2e étape (b)

Dans cet exemple le copolymère greffé est préparé uniquement par polymérisation en émulsion. Le latex utilisé est identique à celui de l'exemple 1 mais non stabilisé.

Le copolymère greffé préparé contient 50 % de polybutadiène, 38 % de styrène, 12 % d'acrylonitrile. On charge le réacteur avec les 50 parties de polybutadiène comptées en extrait sec. On ajuste la dilution avec 180 parties d'eau. On chauffe à 62 °C en agitant à 80 t/mn. A cette température on introduit une solution de 0,5 partie de persulfate de potassium dans 10 parties d'eau et on démarre simultanément une addition continue des monomères et une additon continue de 2,5 parties de sel de colophane dans 35 parties d'eau, tout en maintenant la température à 60 °C. Ces deux alimentations continues durent 4 heures. Le mélange de monomères additionné est constitué de 38 parties de styrène, 12 parties d'acrylonitrile et 0,35 partie de tertiododécyle mercaptan. On laisse ensuite la réaction se dérouler à 60 °C pendant 6 heures.

Le copolymère greffé est ensuite floculé à l'aide d'une solution de sulfate de magnésium puis séché et mélangé à de la résine pour donner la qualité 1.

Les propriétés mécaniques obtenues sont les suivantes :

| | |
|---|---|
| Izod | 120 J/m |
| Traction | 37,0 MPa |
| Dureté | 95 |
| Mooney | 45 |
| HDT | 96 °C |
| Brillance | 93 aspect de surface lisse et brillant |

Le produit obtenu possède un choc Izod nettement insuffisant. En outre le styrène résiduel en fin de réaction est de 0,7 % et l'humidité résiduelle avant séchage est de 43 %.

Les exemples qui suivent entrent dans le cadre du procédé de polymérisation de l'invention.

Dans ces exemples, pour les produits à 50 % d'élastomère le taux d'humidité moyen avant séchage est de l'ordre de 22 % et les monomères résiduels sont inférieurs à 0,1 %.

7

## Exemple 4

Dans cet exemple on prépare des copolymères du type acrylonitrile-butadiène-styrène (ABS). Les caractéristiques des latex utilisés sont données dans le tableau suivant.

| Nature du latex | Polybutadiène monodimen- sionnel | Polybutadiène monodimen- sionnel | Copolymère St/Butadiène monodimen- sionnel | Polybutadiène monodimen- sionnel |
|---|---|---|---|---|
| Référence latex | n | p | c | r |
| Extrait sec | 42,1 % | 33 % | 41 % | 36 % |
| Dn | 2 000 | 1 000 Å | 1 100 Å | 850 Å |
| D'p | 2 050 | 1 030 Å | 1 120 Å | 872 Å |
| Mooney | 220 | 120 | 196 | 70 |
| Taux de gel | 87,9 % | 92,7 % | 90,9 % | 75,4 % |
| Indice de gonflement | 14,2 | 10,6 | 12,8 | 18,2 |
| Stabilisation | Laurate de potassium 1,8 % | Laurate de potassium 1,2 % | Laurate de sodium 1,5 % | Laurate de potassium 1,3 % |
| Essais concernés | a b c d | e b | f c | d e f |

En se référant au tableau I ci-après, on charge le réacteur avec A parties de latex 1 exprimées en poids d'extrait sec — la référence du latex est donnée entre parenthèses dans le tableau I. On ajuste la dilution de façon à ce que l'eau totale y compris celle apportée par le latex représente B parties.

On porte l'agitation dans le réacteur à 80 t/mn et on chauffe le milieu réactionnel à 62 °C. On ajoute C parties de persulfate de potassium dissous dans 10 parties d'eau. on ajuste la régulation à 60 °C et on démarre l'alimentation continue du mélange suivant : styrène D parties, acrylonitrile E parties, tertiododécyle mercaptan (TDM) F parties. Cette alimentation continue effectuée à l'aide d'une pompe doseuse est réglée avec un débit tel que tout le mélange est introduit dans le milieu réactionnel en G heures. Lorsque l'alimentation continue est terminée on effectue un extrait sec sur un échantillon du latex greffé. Cet extrait sec sert au calcul du rapport ax/b. Par l'intermédiaire d'un sas on introduit ensuite H parties de latex 2 — la référence du latex est donnée entre parenthèses dans le tableau I — dont la dilution a été au préalable ajustée de façon à ce que l'eau totale représente I parties puis également par un sas on introduit J parties de styrène, K parties d'acrylonitrile, L parties de TDM, M parties d'anti-oxydant du type phosphite, N parties de perpivalate de t-butyle, P parties de peroxyde de lauroyle, Q parties de perbenzoate de t-butyle.

On porte l'agitation à 300 t/mn et on introduit par un autre sas R parties d'alcool polyvinylique (APV) dissous dans S parties d'eau. On réalise ensuite toujours sous agitation le cycle de suspension indiqué dans le tableau I. On refroidit et vide le réacteur. Les perles sont lavées à l'eau, centrifugées puis séchées en étuve. les propriétés mécaniques des mélanges sont reportées dans le tableau II.

TABLEAU I

| Essai | | a | b | c | d | e | f |
|---|---|---|---|---|---|---|---|
| Latex 1 | A | 40 (n) | 40 (n) | 40 (n) | 37,5 (n) | 37,5 (n) | 55,2 (q) |
| Eau | B | 120 | 120 | 120 | 112,5 | 112,5 | 165 |
| $K_2S_2O_8$ | C | 0,3 | 0,5 | 0,4 | 0,38 | 0,45 | 0,32 |
| Styrène | D | 30,4 | 38 | 36 | 28,5 | 30,4 | 27,3 |
| Acrylonitrile | E | 9,6 | 12 | 10 | 9 | 9,2 | 8,7 |
| TDM | F | 0,4 | 0,5 | 0,5 | 0,38 | 0,25 | 0,1 |
| Durée | G | 3 h | 3 h | 4 h | 2 h 30 mn | 3 h 30 mn | 3 h |
| Latex 2 | H | 10 (n) | 10 (p) | 10 (q) | 12,5 (r) | 12,5 (r) | 4,8 (r) |
| Eau | I | 30 | 30 | 30 | 66 | 66 | 14 |
| Styrène | J | 7,6 | — | 2 | 5,5 | 7,6 | 3,1 |
| Acrylonitrile | K | 2,4 | — | 2 | 3 | 2,8 | 0,9 |
| TDM | L | 0,1 | — | 0,1 | 0,12 | 0,25 | 0,3 |

## 0 000 462

### TABLEAU I (Suite)

| Essai | | a | b | c | d | e | f |
|---|---|---|---|---|---|---|---|
| Anti-oxydant | M | 1 | 1 | 1,5 | 1 | 0,8 | 0,85 |
| Perpivalate | N | 0,2 | — | 0,2 | — | 0,2 | — |
| Lauroyle | P | — | 0,2 | 0,2 | 0,15 | 0,2 | 0,3 |
| Perbenzoate | Q | — | — | 0,1 | 0,2 | 0,05 | 0,1 |
| APV | R | 2 | 2 | 1,5 | 1,2 | 0,95 | 2 |
| Eau | S | 75 | 75 | 75 | 50 | 50 | 50 |
| Cycle suspension | | 60 °C 8 H | 80 °C 6 H | 60 °C 3 H 80 °C 3 H 110 °C 2 H | 80 °C 4 H 110 °C 3 H | 60 °C 3 H 80 °C 2 H 120 °C 2 H | 80 °C 2 H 120 °C 3 H |
| Extrait sec | | 35,9 % | 38,4 % | 37,8 % | 36,5 % | 36,6 % | 31,2 % |
| Taux de conversion | | 85 % | 90 % | 91 % | 93 % | 90 % | 77,7 % |
| ax/b (%) | | 85 % | 112,2 % | 105 % | 93 % | 95,5 % | 50,7 % |

### TABLEAU II

| | Essai | a | b | c | d | e | f |
|---|---|---|---|---|---|---|---|
| **Qualité 1** | Izod (J/m) | 340 | 360 | 380 | 420 | 480 | 440 |
| | Mooney | 44 | 51 | 42 | 43 | 46 | 54 |
| | Brillance | 84 | 89 | 83 | 89 | 88 | 80 |
| | HDT (°C) | 96 | 95 | 95,5 | 95 | 96,2 | 95 |
| | Traction (MPa) | 36,0 | 36,0 | 35,2 | 33,4 | 33,9 | 32,5 |
| | Dureté | 95 | 95,4 | 95 | 96,3 | 97,6 | 92 |
| **Qualité 2** | Izod (J/m) | 170 | 160 | 180 | 220 | 250 | 230 |
| | Mooney | 24 | 28 | 22 | 24 | 26 | 28 |
| | Brillance | 89 | 90 | 90 | 95 | 97 | 84 |
| | HDT (°C) | 96,5 | 96 | 96 | 95,5 | 97 | 95 |
| | Traction (MPa) | 47,5 | 48,2 | 47,7 | 44,7 | 44,2 | 43,0 |
| | Dureté | 111,7 | 112,2 | 112 | 113,4 | 113,6 | 121 |
| **Qualité 3** | Izod (J/m) | 180 | 200 | 220 | 250 | 280 | 260 |
| | Mooney | 74 | 78 | 75 | 75 | 79 | 85 |
| | Brillance | 86 | 87 | 86 | 89 | 91 | 80 |
| | HDT (°C) | 111,5 | 113 | 112,5 | 114 | 114 | 112,5 |
| | Traction (MPa) | 47,0 | 47,4 | 48,0 | 46,0 | 45,8 | 44,0 |
| | Dureté | 111,8 | 111 | 113 | 114 | 114,5 | 112 |

### Exemple 5

On prépare dans cet exemple un copolymère greffé du type méthacrylate de méthyle-butadiène-styrène (MBS).

Pour cela on charge le réacteur avec 40 parties de latex « p » de l'exemple 4 exprimées en extrait sec. On agite à 80 t/mn et on ajuste la dilution de façon à ce que l'eau totale représente 120 parties. On chauffe à 65 °C. A 65 °C on introduit une solution de 0,4 partie de persulfate de potassium dans 8 parties d'eau et on démarre une alimentation continue de durée totale 3 heures avec un mélange composé de 28 parties de méthacrylate de méthyle, 12 parties de styrène et 0,2 partie de tertiododécyle mercaptan. Lorsque l'alimentation continue est terminée on effectue un extrait sec qui est alors de 36 %, ce qui correspond à un taux de conversion de 88 %, le rapport ax/b étant égal à 88 × 40/40 × 88 %. Par l'intermédiaire d'un sas on introduit 10 parties du latex « r » de l'exemple 4 dilué de façon à ce que l'eau totale représente 30 parties puis un mélange de 7 parties de méthacrylate de méthyle, 3 parties de styrène, 0,3 partie de peroxyde de lauroyle et 1 partie d'anti-oxydant du type phosphite. On porte la température à 80 °C, on

**0 000 462**

agite le milieu réactionnel à 350 t/mn puis on introduit une solution de 1,1 partie d'alcool polyvinylique dissous dans 100 parties d'eau. On régule la température à 80 °C pendant 5 heures.

Les perles de copolymère greffé sont lavées à l'eau tiède, centrifugées puis séchées.

On mélange ce copolymère greffé, de façon à ce que le mélange final contienne 20 % de polybutadiène, avec un copolymère méthacrylate de méthyle-styrène contenant en poids 70 % de méthacrylate de méthyle et 30 % de styrène, et de viscosité intrinsèque mesurée dans le diméthylformamide de 0,5 dl/g.

Ce mélange injecté à 175 °C sous 120 bars possède les propriétés mécaniques suivantes :

| | |
|---|---|
| Izod | 250 J/m |
| Mooney | 45 |
| Brillance | 83 |

## Revendications

1. Procédé de fabrication de copolymères greffés par polymérisation en présence de latex d'élastomère, possédant un taux d'insaturation minimum de 3 % en poids, d'un mélange de monomères, composé d'au moins un dérivé vinylaromatique et d'au moins un dérivé acrylique ou méthacrylique, la polymérisation s'effectuant en deux étapes :

a) la première en émulsion aqueuse poursuivie jusqu'au rapport ax/b d'au moins 30 %, « x » étant le taux de conversion des monomères introduits exprimé en pour cent de la quantité totale « a » exprimée en parties en poids desdits monomères et « b» étant la quantité d'élastomère exprimée en parties en poids de matières sèches,

b) la seconde en suspension, caractérisé en ce que dans l'étape a) le latex d'élastomère est monodimensionnel et, le rapport ax/b désiré étant atteint, il est procédé à un nouvel ajout de latex monodimensionnel d'élastomère avant d'achever la réaction dans l'étape b).

2. Procédé selon la revendication 1 caractérisé en ce que le diamètre moyen des particules de latex monodimensionnel est compris entre 300 et 3 000 Å.

3. Procédé selon l'une des revendications 1 à 2 caractérisé en ce que dans la première étape a), avant d'atteindre le rapport ax/b désiré, 60 à 95 % du latex est mis en œuvre.

4. Procédé selon l'une des revendications 1 à 3 caractérisé en ce que le latex monodimensionnel complémentaire est identique ou différent du latex initial mis en œuvre.

5. Procédé selon la revendication 3 caractérisé en ce que le taux de gel du latex complémentaire est de 80 à 95 % pour un indice de gonflement d'environ 8 à 18 dans le cas où il est identique au latex initial mis en œuvre.

6. Procédé selon la revendication 3 caractérisé en ce que le taux de gel du latex complémentaire est de 40 à 80 % pour un indice de gonflement d'environ 15 à 40 dans le cas où il est différent du latex initial mis en œuvre.

7. Procédé selon la revendication 6 caractérisé en ce que le latex initial mis en œuvre possède un taux de gel de 80 à 95 % pour un indice de gonflement d'environ 8 à 18.

## Claims

1. Process for the manufacture of graft copolymers by the polymerisation, in the presence of elastomer latex possessing a minimum degree of unsaturation of 3 % by weight, of a mixture of monomers composed of at least one vinylaromatic derivative and at least one acrylic or methacrylic derivative, the polymerisation being carried out in two steps :

a) the first step being in aqueous emulsion, continued until the ratio ax/b is at least 30 %, « x » being the degree of conversion of the monomers introduced, expressed in per cent of the total amount « a » expressed in parts by weight of the said monomers, and « b » being the amount of elastomer, expressed in parts by weight of solids, and

b) the second being in suspension, characterised in that, in step a), the elastomer latex is one-dimensional and, when the desired ratio ax/b has been reached, a further amount of one-dimensional elastomer latex is added before completing the reaction in step b).

2. Process according to Claim 1, characterised in that the average diameter of the particles of one-dimensional latex is between 300 and 3,000 Å.

3. Process according to one of Claims 1 to 2, characterised in that, in the first step a), 60 to 95 % of the latex is used before the desired ratio ax/b has been reached.

4. Process according to one Claims 1 to 3, characterised in that the additional one-dimensional latex is identical to or different from the initial latex used.

5. Process according to Claim 3, characterised in that the gel content of the additional latex is 80 to 95 % for a swelling index of about 8 to 18, in the case where it is identical to the initial latex used.

6. Process according to Claim 3, characterised in that the gel content of the additional latex is 40 to 80 % for a swelling index of about 15 to 40, in the case where it is different from the initial latex used.

10

7. Process according to Claim 6, characterised in that the initial latex used possesses a gel content of 80 to 95 % for a swelling index of about 8 to 18.

**Ansprüche**

1. Verfahren zur Herstellung von gepfropften Copolymeren in Gegenwart eines Elastomeren-Latex einer Monomerenmischung aus mindestens einem vinylaromatischen Derivat und mindestens einem Acryl- oder Methacrylderivat, mit einem ungesättigten Anteil von mindestens 3 Gewichtsprozent, wobei die Polymerisation in zwei Stufen erfolgt :

a) die erste in wässriger Emulsion, die bis zu einem Verhältnis ax/b von mindestens 30 % durchgeführt wird, wobei « x » der Umwandlungsgrad der eingeführten Monomeren, ausgedrückt in Prozent der Gesamtmenge « a », ausgedrückt in Gewichtsteilen der genannten Monomeren ist und « b » die Elastomerenmenge, ausgedrückt in Gewichtsteilen der trockenen Stoffe, ist

b) die zweite in Suspension, dadurch gekennzeichnet, daß in der Stufe a) der Elastomeren-Latex eindimensional ist und man, wenn das gewünschte ax/b-Verhältnis erreicht ist, eine neue Menge des eindimensionalen Elastomeren-Latex zugibt, bevor die Reaktion in der Stufe b) zu Ende geführt wird.

2. Verfahren nach Anspruch 1, dadurch gekennzeichnet, daß der mittlere Durchmesser der Teilchen des eindimensionalen Latex zwischen 300 und 3 000 Angström liegt.

3. Verfahren nach einem der Ansprüche 1 bis 2, dadurch gekennzeichnet, daß in der Stufe a) vor Erreichen des gewünschten ax/b-Verhältnisses 60 bis 95 % des Latex zugegeben werden.

4. Verfahren nach einem der Ansprüche 1 bis 3, dadurch gekennzeichnet, daß der zusätzliche eindimensionale Latex gleich dem ursprünglich eingesetzten Latex oder von diesem verschieden ist.

5. Verfahren nach Anspruch 3, dadurch gekennzeichnet, daß der Gelgehalt des zusätzlichen Latex 80 bis 95 % beträgt bei einem Quellungsindex zwischen 8 und 18 in dem Fall, wo er gleich dem ursprünglich eingesetzten Latex ist.

6. Verfahren nach Anspruch 3, dadurch gekennzeichnet, daß der Gelgehalt des zusätzlichen Latex 40 bis 80 % beträgt bei einem Quellungsindex von ungefähr 15 bis 40 in dem Fall, wo er vom ursprünglich eingesetzten Latex verschieden ist.

7. Verfahren nach Anspruch 6, dadurch gekennzeichnet, daß der ursprünglich eingesetzte Latex einen Gelgehalt von 80 bis 95 % bei einem Quellungsindex von ungefähr 8 bis 18 besitzt.